(19) Europäisches Patentamt
European Patent Office
Office européen des brevets

(11) **EP 3 931 061 B1**

(12) **FASCICULE DE BREVET EUROPEEN**

(45) Date de publication et mention
de la délivrance du brevet:
**16.04.2025 Bulletin 2025/16**

(21) Numéro de dépôt: **20710582.6**

(22) Date de dépôt: **17.02.2020**

(51) Classification Internationale des Brevets (IPC):
*B60W 50/14* *(2020.01)*     *G01C 21/28* *(2006.01)*
*G01C 21/34* *(2006.01)*     *G08G 1/052* *(2006.01)*
*B60W 50/00* *(2006.01)*

(52) Classification Coopérative des Brevets (CPC):
**G01C 21/3697; B60W 50/14; G08G 1/0112;**
**G08G 1/0145; G08G 1/052; G08G 1/0967;**
B60W 2050/0064; B60W 2520/10; B60W 2556/50

(86) Numéro de dépôt international:
**PCT/FR2020/050286**

(87) Numéro de publication internationale:
**WO 2020/174157 (03.09.2020 Gazette 2020/36)**

(54) **METHODES ET SYSTEMES DE RECOMMANDATION DE VITESSE**

VERFAHREN UND SYSTEME ZUR GESCHWINDIGKEITSEMPFEHLUNG

SPEED RECOMMENDATION METHODS AND SYSTEMS

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **25.02.2019 FR 1901874**

(43) Date de publication de la demande:
**05.01.2022 Bulletin 2022/01**

(73) Titulaire: **Coyote System**
**92150 Suresnes (FR)**

(72) Inventeur: **VAN LAETHEM, Jean-Marc**
**92150 SURESNES (FR)**

(74) Mandataire: **Demulsant, Xavier**
**Dejade & Biset**
**8 Avenue Jean Bart**
**95000 Cergy (FR)**

(56) Documents cités:
WO-A1-2015/128466     WO-A1-2017/058134
WO-A1-2017/174623     WO-A1-2018/106757
CA-A1- 2 919 630       US-A1- 2017 057 411

**Description**

La présente invention a trait au domaine des méthodes et systèmes d'aide à la conduite, et plus particulièrement aux méthodes et systèmes d'assistance d'un utilisateur dans la conduite d'un véhicule telle que la recommandation de vitesse le long d'une zone de vigilance.

On entend ici par « *zone de vigilance* » toute zone d'un réseau routier où une attention particulière à la vitesse de déplacement du véhicule est requise. Plus généralement, une zone de vigilance est une zone géographique s'étalant sur un tronçon de route où la vitesse et/ou la variation de la vitesse du véhicule sur ce tronçon de route devraient, pour des raisons de sécurité, être l'objet d'une attention.

Divers motifs peuvent justifier la définition d'une zone de vigilance le long d'un tronçon de route donné, tels que :

- la configuration géométrique particulière de ce tronçon de route qui comprend, par exemples, un virage serré, une succession de virages, un rond-point, un carrefour, une voie sans issue, une chaussée rétrécie, un passage à niveau, une descente dangereuse, ou un débouché sur un quai ;
- les qualités du revêtement routier sur ce tronçon de route, par exemples un revêtement non drainant, une chaussée pavée ;
- une ou plusieurs règles de la circulation routière à respecter sur ce tronçon de route, par exemples une priorité à droite, un cédez-le-passage, des feux tricolores, un Stop, une zone de contrôle de vitesse, un ralentisseur dos-d'âne, ou des barrières de péage ;
- des activités humaines à proximité ou sur ce tronçon de route, par exemple une zone d'école ;
- des obstacles et l'état du trafic sur ce tronçon de route, par exemples un bouchon, un véhicule arrêté sur la chaussée, un accident, ou un objet sur la route ;
- les conditions climatiques dans une région couvrant ce tronçon de route, par exemples un brouillard, un brouillard givrant, un enneigement, ou un verglas ;
- des évènements divers ayant lieu à proximité ou sur ce tronçon de route, par exemples des travaux, un mouvement social, ou un convoi exceptionnel.

On connait dans l'art antérieur des dispositifs embarqués dans un véhicule automobile permettant d'informer le conducteur de son approche ou de son entrée dans une zone de vigilance. Le document WO2017/174623 décrit un procédé et un dispositif pour l'identification de bouchons ou de zones où la circulation est perturbée de manière régulière, à certains moment de la journée, le procédé utilisant l'historique des données de position des véhicules, une valeur d'encombrement étant calculée par le rapport, sur un segment de route, entre la vitesse de circulation, lorsque le trafic est fluide, et la vitesse moyenne pour la période considérée. De la valeur de ce rapport est déduit un retard, lorsque le segment de route est emprunté, et ce retard est donné à titre d'information, aux conducteurs des véhicules qui s'approchent des zones fréquemment encombrées. Le document US2017/057411 décrit un système permettant une gestion de flotte de camions, un dispositif délivrant une vitesse recommandée au conducteur, à partir d'une analyse statistique des vitesses moyennes des véhicules ayant circulé dans une zone dangereuse, telle qu'une bretelle d'autoroute.

Dans ces dispositifs, des informations concernant cette zone de vigilance, dont notamment la vitesse maximale fixée par les autorités ou les gestionnaires de la voie, sont généralement délivrées à l'attention du conducteur.

Pour cela, des zones du réseau routier sont identifiées au préalable comme des zones de vigilance, et des données les concernant (le motif de vigilance dans cette zone, la limitation de vitesse applicable, les coordonnées géographiques et le sens de circulation concerné) sont mémorisées.

Dès qu'il est déterminé que la vitesse instantanée du véhicule dans une zone de vigilance est supérieure à une valeur seuil fixe associée au préalable à cette zone, une alerte est communiquée au conducteur par le dispositif embarqué, sous forme sonore et/ou visuelle.

Les dispositifs existants présentent des inconvénients.

En particulier, ces dispositifs ne fournissent aucune aide au conducteur en ce qui concerne la variation adéquate de la vitesse le long de la zone de vigilance.

Il revient donc au conducteur d'adapter la vitesse du véhicule, compte tenu de la limitation de vitesse applicable, en fonction de ce qu'il peut voir, de son expérience, de ce qu'il connait des performances du véhicule, et de ce qu'il connait de ses capacités.

Il en résulte qu'aucun accompagnement du conducteur dans l'adaptation de la vitesse du véhicule n'est proposé par les méthodes et systèmes existants.

Les dispositifs existants d'aide à la conduite embarqués dans le véhicule ainsi que les éventuelles signalisations routières disposées dans une zone de vigilance n'enseignent que des vitesses limites autorisées discrètes (de types 130km/h, 110km/h, 90km/h, 70km/h, 50km/h ou 30km/h) que le conducteur doit observer dans ces zones.

Par ailleurs, ce que le conducteur peut voir de la zone de vigilance dans laquelle il circule dépend notamment de ses capacités, des conditions climatiques, des performances du véhicule et de la configuration de la route.

L'expérience du conducteur peut l'amener à une surestimation de ses capacités, et l'âge et/ou l'état du conducteur peut avoir une influence sur la perception du risque.

Le conducteur peut surestimer ses capacités de réaction, ou ne pas connaître précisément les capacités du véhicule.

L'invention vise à pallier au moins en partie les inconvénients des dispositifs d'aide à la conduite de l'art antérieur.

Un objet de l'invention est de proposer un système d'accompagnement de vitesse, quasiment en temps réel, le long d'une zone de vigilance.

Un autre objet de l'invention est de moduler une alerte de vitesses adaptées ou recommandées dans une zone de vigilance, par des informations comprenant des données relatives au conducteur, des données relatives au véhicule, des données relatives à d'autres conducteurs, des données relatives à la zone de vigilance, des données relatives à l'environnement extérieur, et/ou des données relatives à l'itinéraire du véhicule.

Un autre objet de l'invention est de proposer un système d'aide personnalisée à la conduite d'un véhicule, notamment dans une zone de vitesses recommandées.

Un autre objet de l'invention est de proposer un dispositif d'aide à la conduite d'un véhicule, minimisant les risques d'accident pour le conducteur.

Un autre objet de l'invention est de proposer un dispositif d'aide à la conduite, configuré pour alerter de façon pertinente le conducteur de la vitesse excessive de son véhicule dans une zone de vigilance.

Un autre objet de l'invention est d'améliorer la fiabilité des alertes communiquées aux automobilistes dans des zones de vigilance.

Un autre objet de l'invention est de déterminer de manière automatique des zones de vigilances dans un réseau routier.

Un autre objet de l'invention est de mettre à jour de manière dynamique des informations relatives à une zone de vigilance.

Un autre objet de l'invention est de recommander des vitesses différentes associées à des positions différentes dans une zone de vigilance.

Un autre objet de l'invention est de proposer des systèmes et méthodes d'accompagnement de vitesse sur un profil de vitesse associé à une zone de vigilance, ce profil de vitesse étant choisi en fonction de données relatives au conducteur, de données relatives au véhicule, de données relatives à d'autres conducteurs, de données relatives à la zone de vigilance, et/ou de données relatives à l'environnement extérieur.

Un autre objet de l'invention est de proposer une base de données pouvant être exploitée quasiment temps réel, notamment par un dispositif embarqué, cette base de données comprenant des métadonnées à jour relatives à des zones de vigilance.

A cet effet, il est proposé, selon un premier aspect, un serveur distant configuré pour

- collecter des données de vitesse de déplacement associées à des positions sur une route;
- calculer une valeur statistique des données de vitesse associées à sensiblement une même position desdites positions;

- calculer un écart entre la valeur statistique calculée et une vitesse limite prédéfinie associée à ladite sensiblement même position de la route;
- au moins lorsque la différence positive calculée est supérieure à une valeur seuil prédéfinie, générer, sur la base d'une carte numérique de la route, des données de localisation définissant une zone de vigilance dans laquelle une attention particulière à la vitesse de déplacement est requise, la zone de vigilance couvrant un tronçon de route de la route et intégrant ladite sensiblement même position.

Par « *écart* » on désigne ici la différence positive entre une vitesse limite prédéfinie et la valeur statistique calculée en une position de la route. La création d'une zone de vigilance est liée au constat que la vitesse limite prédéfinie est supérieure à la valeur statistique calculée, d'une valeur supérieure à un seuil.

Diverses caractéristiques supplémentaires peuvent être prévues, seules ou en combinaison :

le serveur distant est, en outre, configuré pour

- déterminer, parmi les données de vitesse collectées, des données de vitesse de déplacement associées à des positions comprises dans la zone de vigilance;
- déterminer un profil de vitesse approchant la variation des données de vitesse déterminées en fonction de leurs positions dans la zone de vigilance, ce profil de vitesse associant à une position donnée dans la zone de vigilance une vitesse de déplacement recommandée, le profil de vitesse déterminé étant associé à ladite zone de vigilance ;
- collecter, avec les données de vitesse de déplacement, des données descriptives d'un contexte de conduite ;
- sur la base de critères prédéfinis distinctifs d'au moins un premier contexte de conduite et un deuxième contexte de conduite, distinguer dans les données de vitesse de déplacement collectées au moins un premier groupe de données de vitesse de déplacement et un deuxième groupe de données de vitesse de déplacement, un premier profil de vitesse correspondant au premier groupe et un deuxième profil de vitesse correspondant au deuxième groupe étant associés à ladite zone de vigilance et, respectivement, audit premier contexte de conduite et audit deuxième contexte de conduite ;
- filtrer les données de vitesse de déplacement collectées de sorte à ne prendre en considération pour le calcul de la valeur statistique que les données de vitesse de déplacement dans un sens de déplacement prédéfini sur la route, le profil de vitesse déterminé étant associé audit sens de déplacement prédéfini ;

- générer les données de localisations définissant ladite zone de vigilance lorsque le rayon de courbure de la route à ladite sensiblement même position est inférieur à une valeur de rayon prédéfinie ;

la valeur statistique étant une moyenne, le mode, ou la médiane ;

la zone de vigilance comprenant une pluralité de segments rectangulaires jointifs suivant la courbure du tronçon de route.

Il est proposé, selon un deuxième aspect, un système de recommandation de vitesse de déplacement selon la revendication 8.

Il est proposé, selon un quatrième aspect, une méthode de recommandation de vitesse de déplacement comprenant les étapes suivantes

- collecte de données de vitesse de déplacement associées à des positions sur une route ;
- calcul d'une valeur statistique des données de vitesse associées à sensiblement une même position desdites positions ;
- calcul d'un écart entre la valeur statistique calculée et une vitesse limite prédéfinie associée à ladite sensiblement même position de la route;
- au moins lorsque l'écart calculé est supérieur à une valeur seuil prédéfinie, génération, sur la base d'une carte numérique de la route, des données de localisation définissant une zone de vigilance couvrant un tronçon de route de la route et intégrant ladite sensiblement même position ;
- détection de la présence d'un dispositif d'aide à la conduite sur un tronçon de route couvert par la zone de vigilance générée ;
- identification d'un profil de vitesse prédéterminé associé à la zone de vigilance, ce profil de vitesse associant à une position donnée dans la zone de vigilance une vitesse de déplacement recommandée ;
- détermination de la position du dispositif d'aide à la conduite dans la zone de vigilance ;
- détermination d'une vitesse de déplacement du dispositif d'aide à la conduite sensiblement à la position déterminée ;
- détermination, à partir du profil de vitesse, d'une vitesse de déplacement recommandée associée à la position déterminée ;
- calcul d'un écart entre la vitesse de déplacement déterminée et la vitesse de déplacement recommandée déterminée ;
- déclenchement d'une alerte au moins lorsque l'écart calculé est supérieur à une valeur seuil d'alerte prédéfinie.

D'autres caractéristiques et avantages de l'invention apparaîtront plus clairement et de manière concrète à la lecture de la description ci-après de modes de réalisation, laquelle est faite en référence aux dessins annexés dans lesquels :

- la figure 1 illustre schématiquement des modules du système de recommandation de vitesse de déplacement dans une zone de vigilance, selon divers modes de réalisation ;
- la figure 2 illustre schématiquement une pluralité de zones de vigilance, selon divers modes de réalisation ;
- et la figure 3 illustre schématiquement des profils de vitesse associés à une zone de vigilance, selon divers modes de réalisation.

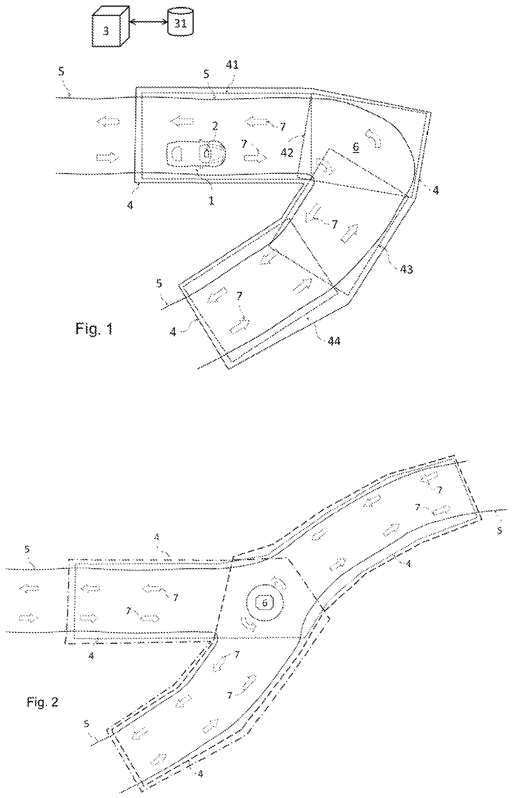

En se référant à la figure 1, il est représenté schématiquement un véhicule 1 pourvu d'un dispositif 2 d'aide à la conduite.

Le véhicule 1, notamment automobile, est tout moyen mobile à vitesse de déplacement contrôlable, tel que, par exemples, une moto, une voiture, un camion, un véhicule tout-terrain, ou un autobus.

Le dispositif 2 d'aide à la conduite est, dans un mode de réalisation, un équipement utilisateur ou compris dans un terminal utilisateur apte à être embarqué dans le véhicule **1**.

En alternative, le dispositif **2** d'aide à la conduite fait partie intégrante du véhicule **1**.

Le dispositif **2** d'aide à la conduite comprend un module de localisation, permettant de déterminer la localisation géographique actuelle de ce dispositif **2** d'aide à la conduite et, par conséquent, celle du véhicule **1** dans lequel ce dispositif **2** est installé.

Pour cela, le module de localisation comprend, dans un mode de réalisation, des moyens de localisation satellitaires (de type GPS, GLONASS, GALILEO, ou BeiDou) et/ou par réseaux terrestres.

Plus généralement, le dispositif **2** d'aide à la conduite est configuré pour générer des données de localisation permettant de localiser de manière relative ou absolue ce dispositif **2** d'aide à la conduite dans un réseau routier.

Le dispositif **2** d'aide à la conduite comprend, en outre, un processeur, apte à déterminer la vitesse de déplacement, ou plus généralement des données de vitesse de déplacement, de ce dispositif **2** d'aide à la conduite et, par conséquent, celle du véhicule **1** dans lequel ce dispositif **2** d'aide à la conduite est installé.

La vitesse de déplacement du dispositif **2** d'aide à la conduite peut être déterminée à partir de la variation dans le temps de la position du véhicule **1** et/ou récupérée à partir d'un capteur de vitesse équipant le véhicule **1**.

Le dispositif **2** d'aide à la conduite comprend, en outre, un module de communication, apte à communiquer de manière bidirectionnelle avec un serveur **3** distant. Cette communication est établie via tout réseau de communication de données sans fil approprié (par exemples, GPRS, 3G, 4G, ou 5G).

Le dispositif **2** d'aide à la conduite est, dans un mode de réalisation, un terminal utilisateur mobile tel qu'un téléphone intelligent (Smartphone). Ce terminal utilisateur mobile comprend une application logicielle, un processeur, un module de localisation, et un module de communication apte à communiquer avec le serveur **3** distant.

Le dispositif **2** d'aide à la conduite communique au serveur **3** distant des données de vitesse de déplacement associées à des positions sur la route **5** du véhicule **1.** Ces données peuvent être transmises au serveur **3** distant en temps réel ou en temps différé (c.à.d. temporairement mémorisées et ensuite communiquées au serveur). Ces données peuvent être transmises au serveur **3** distant sur requête de ce dernier, par exemple lorsque le véhicule **1** se trouve sur une route **5** ou un tronçon de route prédéfinis.

Les données de vitesse de déplacement associées à des positions sur la route **5** du dispositif **2** d'aide à la conduite comprennent, par exemple, des données de positions successives horodatées, de sorte à pouvoir estimer une vitesse de déplacement à des (ou à ces) positions successives. Ces données de vitesse peuvent aussi comprendre des vitesses instantanées mesurées à différentes positions sur la route **5**.

Les données de positions peuvent comprendre des coordonnées géographiques (de type coordonnées GPS sous forme de latitude et longitude), des abscisses curvilignes sur la route **5** ou, plus généralement, toute donnée renseignant sur la position du véhicule **1** de façon absolue (par rapport à un point fixe) ou relative (par exemples, par rapport à la position précédente du véhicule **1** ou toute autre position).

Le serveur **3** distant collecte, dans une base de données **31**, les données de vitesse de déplacement associées à des positions sur la route **5** qui lui sont communiquées par des dispositifs **2** d'aide à la conduite, respectivement, embarqués dans des véhicules **1** ayant déjà traversé la route **5** ou un tronçon de cette route **5**.

Le serveur **3** distant est pourvu d'une carte numérique d'un réseau routier (c.à.d. une cartographie d'un réseau routier) intégrant la route **5**. Cette carte numérique comprend, outre des données de localisation géographique de la route **5**, des limitations de vitesses (ou des vitesses limites) de déplacement, respectivement, associées à des tronçons/sections de cette route **5**. Cette carte numérique peut aussi comprendre un ou deux sens de circulation, associés à la route **5**.

Dans un mode de réalisation, le dispositif **2** d'aide à la conduite communique au serveur **3** distant des données descriptives du contexte actuel de conduite du véhicule **1**.

Les données descriptives d'un contexte de conduite comprennent des informations relatives aux conditions climatiques actuelles (par exemples température, vitesse et orientation du vent, visibilité, pluviométrie, pluie, brouillard, brouillard givrant, ou enneigement).

Le dispositif **2** d'aide à la conduite peut obtenir de telles informations à l'aide de capteurs et/ou moyens dédiés qui y sont intégrés et/ou les récupérer depuis d'autres moyens ou équipements utilisateur (par exemples des plateformes dédiées ou des applications mobiles).

Le dispositif **2** d'aide à la conduite peut aussi obtenir ces informations depuis le véhicule **1** (par exemple à partir de l'état de fonctionnement des essuie-glaces, des systèmes de désembuage, de dégivrage des vitres ou de climatisation).

Les données descriptives du contexte actuel de conduite comprennent des informations relatives au contexte temporel telles que l'heure (heure de pointe, jour/nuit, lever/coucher du soleil provoquant un éblouissement), le jour (jour ouvré, fin de semaine, jour férié), ou le mois (saison).

En outre, les données descriptives du contexte actuel de conduite comprennent des informations comprises dans un profil utilisateur relatif au conducteur. Ces informations peuvent être renseignées par l'utilisateur (âge, genre, année d'obtention du permis de conduire, nombre de kilomètres parcourus par an, temps de réaction moyen, préférences) ou déterminées par le dispositif **2** d'aide à la conduite.

Un profil utilisateur est, dans un mode de réalisation, déterminé par le dispositif **2** d'aide à la conduite à partir des données utilisateur à sa disposition. Ce profil utilisateur est par exemple de type « conducteur apprenti », « conducteur expérimenté » « personne âgée », « conduite sportive », « conduite nerveuse », « conduite normale ».

Dans un mode de réalisation, le profil utilisateur est choisi parmi une liste prédéfinie. En partant d'un profil utilisateur prédéfini, le dispositif **2** d'aide à la conduite « apprend » au cours de son utilisation les caractéristiques spécifiques de l'utilisateur et affine, en conséquence, le profil utilisateur. Plus le dispositif **2** d'aide à la conduite est utilisé et plus le profil utilisateur est représentatif.

Dans un mode de réalisation, le dispositif **2** d'aide à la conduite est configuré pour détecter un état de somnolence (d'endormissement) ou de fatigue de l'utilisateur. Le dispositif **2** d'aide à la conduite est apte à analyser les signes précurseurs d'un état de somnolence ou de fatigue de l'utilisateur, de tels états pouvant avoir un impact sur le temps de réaction, sur l'appréciation des risques, et sur la qualité d'un freinage.

Pour cela, le dispositif **2** d'aide à la conduite observe régulièrement des symptômes ou des signes d'un état de somnolence ou de fatigue de l'utilisateur, tels que le temps de circulation du véhicule depuis le dernier arrêt de celui-ci et/ou l'heure de conduite par rapport à des horaires critiques et/ou un indice d'inactivité du conducteur déduit à partir des variations successives de cap et/ou de vitesse du véhicule sur une période de temps donnée.

Les informations relatives à l'utilisateur sont, dans un mode de réalisation, communiquées au serveur **3** distant de manière anonyme.

Les informations descriptives du contexte de conduite comprennent aussi des informations relatives au véhicule **1**. Ces informations incluent, par exemples, le poids en charge du véhicule, le poids sans charge du véhicule, le fait que le véhicule tracte une remorque (ou un van, une caravane), la puissance, la marque du véhicule, le type de véhicule (utilitaire, tout-terrain, sport, motocycle par exemples), la date et le contenu du dernier contrôle technique, le kilométrage et, d'une manière plus générale, toute information sur le véhicule **1** pouvant impacter ses performances de freinage, telle que par exemple la qualité/pression des pneus.

En variante ou en combinaison, le dispositif **2** d'aide à la conduite émet à l'attention du conducteur un message d'interrogation portant sur au moins une information descriptive du contexte de conduite (commencement/fin de travaux, modification d'une limitation de vitesse ou d'une règle de la circulation routière, présence d'un objet sur la route, d'un véhicule arrêté sur la chaussée, d'un accident, d'un mouvement social ou d'un convoi exceptionnel, par exemples).

Pour cela, le dispositif **2** d'aide à la conduite comprend des moyens d'interrogation de l'utilisateur du véhicule (un écran et/ou un haut-parleur par exemples) sur une information descriptive du contexte de conduite.

Le dispositif **2** d'aide à la conduite comporte des moyens (un clavier, un clavier tactile ou un micro par exemples ou, plus généralement, tout moyen d'entrée de données), aptes à permettre à l'utilisateur de répondre à cette interrogation.

Les données de vitesse de déplacement et les informations relatives aux contextes de conduite correspondants sont utilisées par le serveur **3** distant pour déterminer des zones de vigilance **4** sur la route **5**.

Dans un mode de réalisation, le serveur **3** distant applique un traitement visant à filtrer ou éliminer les données de vitesses extrêmes, non représentatives de la circulation sur la route **5** ou sur un tronçon de cette route **5**. Par exemple, seules les vitesses comprises entre une première valeur seuil et une deuxième valeur seuil sont retenues.

Les données de vitesses collectées peuvent, en outre, être filtrées par sens de déplacement du dispositif **2** d'aide à la conduite.

En variante ou en combinaison, le serveur **3** distant classifie les données de vitesses collectées en une pluralité de groupes, sur la base de critères prédéfinis distinctifs de contextes de conduite. Ces critères peuvent être temporels (jour/nuit par exemple), météorologiques (beau/mauvais temps par exemple), liés à l'utilisateur (conducteur apprenti/expérimenté par exemple), au véhicule (véhicule de tourisme ou utilitaire par exemples), ou à une combinaison de ces critères.

La classification des données de vitesse se base sur les informations relatives aux contextes de conduite tels que le contexte temporel (conduite de nuit, conduite en heure de pointe par exemples), le contexte climatique (conduite par mauvais temps/par beau temps), le contexte véhicule (performances du véhicule, catégorie de véhicule), et/ou le profil utilisateur (« conducteur apprenti », « conducteur expérimenté » « personne âgée », « conduite sportive », « conduite normale »).

Le serveur **3** distant est, en outre, configuré pour calculer une valeur statistique des données de vitesse collectées qui sont associées à sensiblement une même position de la route **5**. Deux positions sont considérées comme étant sensiblement les mêmes lorsqu'elles sont séparées d'une distance inférieure à une distance seuil prédéfinie (1m, 2m, 3m, 5m, ou 10m, par exemples).

La valeur statistique calculée est, par exemples, une moyenne (la moyenne arithmétique, géométrique, harmonique, ou quadratique par exemples), ou bien encore le mode ou la médiane.

Dans un mode de réalisation, le serveur **3** distant parcourt la route **5** pour calculer une valeur statistique (par exemple, la moyenne) des données de vitesses relevées à chacune des positions de la route **5**.

Dans un autre mode de réalisation, le serveur **3** distant calcule une valeur statistique (par exemple, la moyenne) des données de vitesses relevées à chacune des positions comprises dans un tronçon de la route **5** (par exemple, un tronçon comprenant un ou plusieurs virages).

En variante, le serveur **3** distant calcule la valeur statistique (par exemple, la moyenne) des données de vitesses relevées sensiblement à une même position. Cette position est, par exemple, un point critique sur la route **5** tel qu'un point où le rayon de courbure de la route **5** est inférieur à une valeur prédéfinie.

Dans un autre mode de réalisation, le serveur **3** distant détermine une fonction approchant la variation des données de vitesse collectées en fonction des positions sur la route **5** où ces données de vitesse ont été relevées. Dans ce cas, la valeur statistique des données de vitesse de déplacement associées à une position est donnée par la valeur à cette position de la fonction approchante. Pour chaque position de la route **5**, le serveur **3** distant calcule un écart entre la vitesse donnée par la fonction à cette position et la vitesse limite associée à cette position.

Plus généralement, le serveur **3** distant détermine en au moins une position de la route **5** une approximation des données de vitesse de déplacement collectées qui sont associées à sensiblement cette même position. Cette approximation est, dans un mode de réalisation, une valeur statistique des données de vitesse de déplacement collectées qui sont associées à sensiblement cette même position.

Cette valeur statistique peut être de type moyenne, mode ou médiane d'une pluralité de données de vitesse de déplacement associées à sensiblement une même position ou la valeur à cette position d'une fonction approchant la variation des données de vitesse collectées en fonction des positions sur un tronçon de la route **5** comprenant cette position.

Le serveur **3** distant calcule un écart entre la valeur statistique calculée en une position de la route 5 et une vitesse limite associée à cette position de la route **5**.

Par « écart » on désigne ici la différence positive entre la vitesse limite et la valeur statistique calculée.

La création d'une zone de vigilance est liée au constat que la vitesse limite prédéfinie est supérieure à la valeur statistique calculée, d'une valeur supérieure à un seuil. La vitesse limite est par exemple, ainsi qu'il apparaîtra plus complètement dans la suite de cette description, une vitesse limite dans un virage déterminée à partir du rayon de courbure de la route.

L'écart calculé peut être un écart (valeur de la différence entre la valeur statistique calculée et la vitesse limite) ou un écart relatif (écart multiplié par cent et divisé par la vitesse limite). Dans un autre mode de réalisation, l'écart calculé est un écart-type.

Lorsque l'écart calculé est supérieur à une valeur seuil prédéfinie, le serveur **3** distant génère, sur la base de la carte numérique de la route **5**, des données de localisation définissant une zone de vigilance **4** couvrant un tronçon de la route **5**.

Cette zone de vigilance **4** intègre la position de la route **5** où l'écart calculé est supérieur à la valeur seuil prédéfinie. Lorsque l'écart calculé est faible, le serveur **3** distant identifie que les conducteurs ajustent leurs vitesses pour tenir compte d'une particularité du tronçon de route, notamment un virage.

Lorsque la valeur statistique calculée en une position de la route **5** est très inférieure à une vitesse limite associée à cette position de la route **5**, l'écart est élevé et le serveur **3** distant identifie que les conducteurs ajustent leurs vitesses pour tenir compte d'un contexte, par exemple chaussée dégradée.

Une zone de vigilance **4** correspond ainsi à un tronçon de la route **5**. Cette zone de vigilance **4** comprend par exemple un virage.

La zone de vigilance **4** s'étend longitudinalement suivant l'axe de la route **5**. La zone de vigilance **4** suit la courbure (c'est à dire la sinuosité ou la géométrie) de la route **5**.

Pour cela, la zone de vigilance **4** comprend, dans un mode de réalisation, un polygone (simple ou croisé) et/ou une pluralité de polygones simples **41-44** jointifs, qui suivent le tracé de la route **5**. Les polygones simples **41-44** sont, dans un mode de réalisation, des segments (ou sections) rectangulaires **41-44**.

Une zone de vigilance **4** est une modélisation par un ou plusieurs segments rectangulaires **41-44**, ou plus généralement par un ou plusieurs polygones **41-44** jointifs, d'un tronçon de la route **5**.

Le nombre des segments rectangulaires **41-44** constituant une zone de vigilance **4** dépend de la courbure de la route **5** à cet endroit.

Un angle maximal prédéfini de désalignement entre l'axe d'un segment rectangulaire et l'axe local (c.à.d. à cet endroit) de la route **5** permet de déterminer le nombre de segments composant une zone de vigilance **4**.

Cet angle maximal est, par exemples, de 15°, 20°, 25° ou 30°.

Un angle maximal faible (10° ou 15° par exemples) améliore la correspondance entre des données de localisation de la zone de vigilance **4** et l'emplacement réel du tronçon de la route **5**, mais augmente le nombre de segments et, par conséquent, le volume de données relatives à cette zone de vigilance **4**.

La largeur d'un segment rectangulaire est choisie de sorte à tenir compte d'une éventuelle différence entre l'emplacement réel de la route **5** et la carte numérique du réseau routier à partir de laquelle la zone de vigilance **4** est créée.

Cette largeur est aussi choisie de façon à tenir compte d'une imprécision du module de localisation du dispositif **2** d'aide à la conduite.

Des informations relatives au tronçon de route couvert par la zone de vigilance **4** sont associées à cette zone de vigilance **4**. Ces informations comprennent, par exemples, un sens de circulation **7**, une limitation de vitesse, un nombre de voies de circulation, une largeur des voies de circulation, un rayon de courbure, la valeur d'un dévers, une pente. Une ou plusieurs de ces informations peuvent être récupérées de la carte numérique de la route **5**.

Les données de localisation d'une zone de vigilance **4** permettant sa localisation géographique sur la route **5**. Ces données de localisation comprennent des coordonnées géographiques (par exemple, sous forme de latitude et longitude) et/ou des distances (par exemples, rayon, longueur, largeur), permettant de localiser (ou, définir), dans un système de coordonnées prédéfini, une zone du globe terrestre couvrant un tronçon de la route **5**.

Les données de localisation d'une zone de vigilance **4** comprennent les données de localisation des segments rectangulaires **41-44** (ou, plus généralement, des polygones **41-44**) la constituant.

Les données de localisation d'un segment rectangulaire peuvent être définies de manière absolue et/ou relative.

Un segment rectangulaire peut être défini par des coordonnés géographiques d'un ou plusieurs points (coins, centre, milieu(s) d'une ou plusieurs côté(s)), et/ou par des distances (largeur, longueur).

Dans un mode de réalisation, les données de localisation de chacun des segments constituant une zone de vigilance **4** sont établies par une largeur et par les coordonnées géographiques (latitude et longitude) des milieux (un premier point A et un deuxième point B) des deux côtés opposés du segment rectangulaire perpendiculaires à l'axe de la route **5**. Le vecteur reliant le point A au point B correspond au sens de circulation sur le tronçon de route représenté par le segment rectangulaire en question.

Avantageusement, une zone de vigilance **4** ne concerne qu'un sens de circulation. Ainsi par exemple, pour un tronçon de route comprenant un virage dangereux dans les deux sens de circulation, deux zones de vigilance **4** sont créées.

Dans d'autres mises en œuvre, les informations associées à la zone de vigilance **4** comprennent des données définissant le ou les sens de circulation **7** sur le tronçon de route **5** qui sont concernés par cette zone de vigilance **4**.

Le sens de circulation **7** associé à la zone de vigilance **4** est celui de la route **5** au niveau de chacun des polygones **41-44** constituant cette zone de vigilance **4**.

Le sens de circulation **7** dans la zone de vigilance **4** est, dans un mode de réalisation, déterminé à partir du sens de déplacement du véhicule **1** en examinant l'évolution de ses données de position.

Ceci permet d'utiliser, pour la création d'une zone de vigilance **4**, une cartographie du réseau routier qui n'enseigne pas le sens de circulation **7** ou une cartographie du réseau routier dont les informations concernant les sens de circulation **7** ne sont pas à jour.

La zone de vigilance **4** s'étend sur la route **5** de part et d'autre d'une position à laquelle l'écart calculé est supérieur à la valeur seuil prédéfinie (dite point critique **6**) de, respectivement, une première distance curviligne et une deuxième distance curviligne. Ces distances curvilignes peuvent être choisies en fonction de la vitesse limite associée à la route **5** au niveau de cette position.

Ces distances curvilignes peuvent, en outre, être choisies en fonction du type de la route **5** (autoroute, route nationale, ou route régionale par exemples), en fonction du contexte de conduite (conditions climatiques, profil utilisateur, performances du véhicule **1**) et/ou de valeur de l'écart calculé à la position en question. Une ou chacune de ces distances curvilignes peut être déterminée en remontant section par section l'itinéraire emprunté par l'utilisateur qui va passer par la position à laquelle l'écart calculé est supérieur à la valeur seuil prédéfinie, jusqu'à une distance maximale.

Par exemple, une zone de vigilance **4** est construite en partant de part et d'autre de la position de la route **5** où un écart maximal entre la valeur statistique des vitesses relevées et la vitesse applicable à cette position est constaté, respectivement, d'une première distance et d'une deuxième distance. Une première distance est choisie en s'éloignant progressivement dans le sens inverse du sens de circulation **7** sur la route **5** qui mène à cette position et une deuxième distance est choisie en s'éloignant progressivement dans le sens de circulation **7** sur la route **5** à partir de cette position.

Par exemple, la première distance et la deuxième distance sont, respectivement de 150 et 20 mètres pour une zone de vigilance **4** couvrant une intersection non contrôlée, 100 et 200 mètres pour une zone de vigilance **4** couvrant un embouteillage, ou 300 et 50 mètres pour une zone de vigilance **4** couvrant un accident sur une autoroute.

Dans l'exemple illustratif de la figure 1, la zone de vigilance **4** s'étale de part et d'autre du point critique **6** d'un virage serré.

Dans un mode de réalisation, plusieurs zones de vigilance **4** de longueurs différentes sont construites.

Par exemple, trois zones de vigilance **4** sont construites en partant d'un point critique **6** (le point où l'écart entre la valeur statistique des vitesses relevées et une vitesse limite associée à ce point est supérieur à la valeur seuil) sur la route **5** et en s'en éloignant progressivement dans le sens inverse du sens de circulation 7 sur la route **5** jusqu'à, respectivement, trois distances (par exemples 100, 200 ou 300 mètres).

Dans l'exemple illustratif de la figure 2, trois zones de vigilance **4** sont créées, à partir des données relatives au point critique **6** compris dans un carrefour giratoire.

Dans un mode de réalisation, le serveur **3** distant vérifie, afin d'améliorer la fiabilité des zones de vigilance **4** déterminées à partir des relevées des données de vitesse, la cohérence des données déterminées avec des données comprises dans la carte numérique du réseau routier (notamment, lorsque la zone de vigilance **4** déterminée couvre un ou une succession de virages serrés, un Stop, une intersection, un rond-point, un carrefour, ou une voie sans issue).

A titre d'exemple, dès que la valeur statistique des données de vitesse relevées en un point d'un tronçon de route est inférieure à une limitation de vitesse applicable en ce point de la route **5** d'au moins une valeur positive prédéfinie (par exemples 10km/h, 15km/h, ou 20 km/h) ou est inférieure à un pourcentage donné de cette limitation de vitesse (par exemples, 80%, 75% ou 60%), une zone de vigilance **4** couvrant un tronçon de route de part et d'autre de ce point est générée par le serveur **3** distant.

Dans un autre mode de réalisation, pour générer une zone de vigilance **4** comprenant une position où l'écart entre la moyenne des vitesses relevées et la vitesse limite associée à la route **5** à cette position est supérieur à la valeur seuil prédéfinie, le serveur **3** distant vérifie si la géométrie (ou la topologie) de la route **5** à cette position comprend une ou plusieurs configurations physiques particulières prédéfinies. Une configuration physique de la route **5** est dite particulière dès qu'il y est déterminé un motif de vigilance.

Une liste de configurations physiques particulières comprend avantageusement un virage d'un rayon de courbure prédéfini, une pente et/ou un dévers prédéfinis, une intersection prédéfinie (notamment, non contrôlée par un marquage, par une barrière, par un panneau de signalisation ou par des feux tricolores), un sommet de côte ayant une pente et/ou un devers prédéfinis, ou une combinaison de ces configurations.

Une configuration particulière de la route **5** peut être déterminée à partir de sa carte numérique. Par exemple, lorsqu'une route **5** est définie par une équation cartésienne de type $y = f(x)$, un virage géométrique peut y être identifié en calculant le rayon de courbure, selon la

formule suivante :

$$\rho(x) = \left| \frac{\left(1 + y'^2\right)^{3/2}}{y''} \right|$$

où $\rho$ est le rayon de courbure de la route **5** et y' et y'' sont respectivement la dérivée première et la dérivée seconde de y par rapport à x.

En variante ou en combinaison, une configuration physique particulière de la route **5** peut être déterminée à partir des données de positions reçues depuis une pluralité de dispositifs 2 d'aide à la conduite, respectivement, embarqués dans des véhicules **1**. Par exemple, en se basant sur les données de positions collectées et exprimées dans un repère orthonormé, un virage géométrique est déterminé par la formule suivante :

$$\rho(t) = \left| \frac{\left(x'^2 + y'^2\right)^{3/2}}{x'y'' - y'x''} \right|$$

où $\rho$ est le rayon de courbure de la route **5** et y' et y'' (respectivement, x' et x'') sont respectivement la dérivée première et la dérivée seconde de y (respectivement, de x) par rapport au temps t.

Plus généralement, un virage géométrique est une succession de point de la route possédant un rayon de courbure inférieur à un seuil prédéfini et ayant une direction constante (virage à droite, virage à gauche).

Une vitesse limite associée au point du virage où la courbure de la route **5** est maximale (la courbure étant l'inverse du rayon de courbure) est déterminée à partir de paramètres descriptifs de ce virage, tels que la courbure, le dévers ou la pente de la route **5** au niveau de ce virage. Par exemples, cette vitesse limite est déterminée à partir du rayon de courbure de la route 5 comme suit :

$$V_{limite} = \sqrt{\rho g \mu}$$

où $\rho$ est le rayon de courbure de la route **5**, g est l'accélération de la pesanteur (g=9,81 m/s$^2$) et $\mu$ est un coefficient d'adhérence de la route (un coefficient de frottement ou de friction entre les pneus et la chaussée).

En variante, la vitesse limite associé au point du virage où la courbure de la route 5 est maximale est déterminée à partir du dévers d, le rayon de courbure $\rho$ et l'adhérence $\mu$ de la route comme suit :

$$V_{limite} = \sqrt{\rho g} \sqrt{\frac{d + \mu}{1 - d\mu}}$$

Dans un mode de réalisation, la vitesse limite V_limite associée au point du virage où la courbure de la route **5** est maximale est déterminée à partir d'une analyse statistique des données de vitesse relevées en ce point. Par exemple, cette vitesse limite est la moyenne des vitesses relevées en ce point critique du virage. En variante, la vitesse limite est le mode, la valeur minimale, la valeur maximale, ou la valeur médiane des vitesses relevées sensiblement au point critique du virage.

Parmi l'ensemble des virages identifiés sur une route 5, certains peuvent être qualifiés de dangereux - et donc ajoutés à la liste des configurations physiques particulières - sur la base de filtres intégrant seuls ou en combinaison :

- un premier filtre, basé sur le volume et la diversité des données de vitesses relevées (le nombre de données GPS dans un virage et/ou le nombre de dispositifs **2** d'aide à la conduite distincts ayant passé par ce tronçon de route et/ou la diversité des contextes de conduite) ;
- un deuxième filtre, basé sur la validité du virage (cohérence de la valeur statistique des vitesses relevées au point critique d'un virage avec la vitesse de passage théorique de ce virage calculé en fonction du rayon de courbure de la route) ;
- un troisième filtre, basé sur la cohérence entre l'étude en amont du virage et à l'intérieur du virage (la moyenne des vitesses relevées et la limitation de vitesse applicable devant être semblables);
- un quatrième filtre, basé sur la dangerosité du virage (en fonction du coefficient de décélération propre à ce virage).

Pour chaque virage, une méthode de régression appliquée sur les vitesses relevées à différentes distances parcourues dans le virage permet de déterminer un profil (décélération, vitesse cible de passage) propre à ce virage.

Les informations associées à une zone de vigilance **4** comprennent au moins un profil **8** de vitesse. Lorsque plus d'un sens de circulation **7** est concerné par la zone de vigilance **4**, un profil **8** de vitesse est associé à chaque sens de circulation.

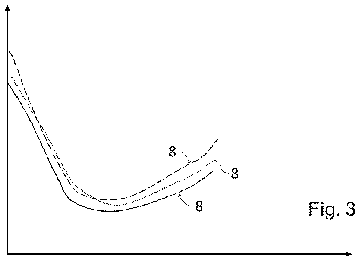

Tel qu'il est illustré par la figure 3, un profil **8** de vitesse comprend des vitesses recommandées (en ordonnées sur le graphe de la figure 3), à différentes positions ou, de manière équivalente, à différentes distances parcourues dans la zone de vigilance **4** (en abscisses sur le graphe de la figure 3).

Plus généralement, un profil **8** de vitesse comprend des vitesses à adopter le long de la zone de vigilance **4** dans le sens de circulation **7** qui permettent au véhicule **1** de traverser cette zone en toute sécurité.

Un profil **8** de vitesse est une modélisation des variations, en fonction de la distance parcourue dans la zone de vigilance **4,** des données de vitesse collectées associées à des positions comprises dans la zone de vigilance **4**.

Dans un mode de réalisation, un profil **8** de vitesse est une fonction approchant les variations, en fonction des positions dans la zone de vigilance **4** des données de vitesse collectées associées à des positions comprises dans la zone de vigilance **4**.

Pour cela, des méthodes de régression (multilinéaire, polynomiale, ou autre) peuvent être utilisées, pour déterminer une fonction approchant la variation en fonction de la position (ou la distance parcourue) dans la zone de vigilance **4** des données de vitesses collectées. Différentes techniques de modélisation, d'ajustement de courbe ou d'analyse de données expérimentales de l'état de l'art peuvent être utilisées à cette fin.

Ainsi, pour une zone de vigilance **4** généré, le serveur **3** distant est configuré pour

- déterminer, parmi les données de vitesse collectées, celles qui sont associées à des positions comprises dans cette zone de vigilance **4** ; et
- déterminer un profil **8** de vitesse approchant la variation des données de vitesse déterminées, en fonction de leurs positions dans la zone de vigilance **4**.

Dans un mode de réalisation avantageux, illustré par la figure 3, plusieurs profils **8** de vitesse sont associés à une même zone de vigilance **4** par contexte de conduite. Pour cela, le serveur **3** distant

- sélectionne l'ensemble des données de vitesses associées à des positions comprises dans une zone de vigilance **4** ;
- filtre les données sélectionnées, en y éliminant les données de vitesses extrêmes ;
- sur la base des informations relatives aux contextes de conduite qui lui sont communiquées avec les données de vitesses, classifie les données de vitesse filtrées en une pluralité de groupes, correspondants à des contextes de conduite distincts (par exemples conduite par mauvais temps et conducteur apprenti, conduite de nuit et véhicule chargé) ;
- détermine un profil 8 de vitesse par contexte de conduite (c.à.d. par groupe de données de vitesse), en modélisant les données de vitesses correspondant à ce contexte.

Différents profils **8** de vitesse peuvent également être envisagés par segments jointifs constituant la zone de vigilance **4**.

Dans un autre mode de réalisation, un profil **8** de vitesse par défaut, déterminé à partir de l'ensemble des données de vitesses collectées sans distinction de contexte de conduite, est associé à la zone de vigilance **4**.

Dans un autre mode de réalisation, au lieu d'être déterminées de façon indépendante des conducteurs, les vitesses relevées dans une zone de vigilance **4** sont traitées par utilisateur, de sorte à retenir comme profil **8** de vitesse les vitesses relevées d'un conducteur considéré comme étant un utilisateur-type.

En variante ou en combinaison, les données de vitesse de déplacement relevées sont affectées de coefficients, de sorte que la valeur statistique calculée soit pondérée (telle qu'une moyenne pondérée). Ces coefficients sont, dans un mode de réalisation, associés aux profils utilisateurs, tels que des indices de fiabilité de ces utilisateurs. L'indice de fiabilité d'un utilisateur est proportionnel à son utilisation du dispositif **2** d'aide à la conduite et/ou à son respect des limitations de vitesse applicables depuis une période de temps donné.

Dans un mode de réalisation, un profil **8** de vitesse initial est déterminé de manière théorique, sur la base de la géométrie du tronçon de route et la limitation de vitesse et/ou les règles de la circulation routière qui y sont applicables. Ce profil **8** de vitesse initial est, par la suite, affiné de manière dynamique, à l'aide de relevés de vitesse à différentes positions ou distances parcourues dans la zone de vigilance **4**.

Par exemple, une première approximation théorique d'un profil **8** de vitesse le long d'un segment (ou un polygone) d'une zone de vigilance **4** comprenant un virage est donnée par l'équation suivante

$$v(D) = \sqrt{v_{cible\_sortie}^2 - 2aD}$$

où

v(D) est la vitesse recommandée à une distance D restante à parcourir par le véhicule **1** dans ce segment, dans le sens de circulation qui lui est associé ;
v_cible_sortie est la vitesse cible de sortie de ce segment ;
a est l'accélération (ou, plus précisément, la décélération), supposée constante, du véhicule **1** dans ce segment de la zone vigilance **4** (par exemple -2m/s$^2$, -3m/s$^2$,ou -5m/s$^2$).

Dans un mode de réalisation, l'accélération a est une constante propre à chaque segment de la zone de vigilance **4**.

Dans un autre mode de réalisation, le profil 8 de vitesse recommandée prend en considération le temps de réaction de l'utilisateur de la manière suivante :

$$v(D) = \sqrt{v_{cible\_sortie}^2 - 2a(D - d)}$$

où v(D) est la vitesse recommandée à la distance D restante à parcourir par le véhicule **1** dans un segment de la zone de vigilance **4** dans le sens de circulation qui lui est associé ;
v_cible_sortie est la vitesse cible de sortie de ce segment de la zone de vigilance **4** ;
a est une constante négative prédéfinie associée à ce segment de la zone de vigilance **4** et/ou à un profil utilisateur ;

d est la distance parcourue par le véhicule **1** pendant le temps de réaction de l'utilisateur. Cette distance d est donnée par le produit de la vitesse actuelle du véhicule par le temps de réaction de l'utilisateur (d=vitesse_actuelle_véhicule * temps_réaction_utilisateur).

Il est supposé, dans ce qui précède, que la quantité (**D-d**) est positive. Dans le cas contraire, v(D) est donnée par v_cible_sortie (c.à.d., v(D)= v_cible_sortie).

Dès qu'une zone de vigilance **4** est générée ou mise à jour, le serveur **3** distant mémorise les informations la concernant dans la base de données **31** et les met, ainsi, à disposition des dispositifs **2** d'aide à la conduite et/ou leur les communique.

Dans un mode de réalisation et afin de faciliter la détection d'entrée du véhicule **1** dans une zone de vigilance **4** parmi l'ensemble des zones de vigilance **4** disponibles dans la base de données **31**, les données relatives aux zones de vigilance **4** se trouvant à une distance prédéfinie de la position actuelle du véhicule **1** sont reçues (dans une mémoire tampon) par le dispositif **2** d'aide à la conduite, depuis le serveur **3** distant.

Dans un autre mode de réalisation, le dispositif **2** récupère depuis le serveur **3** les données d'un nombre prédéfini de zones de vigilance **4** et/ou ou celles se trouvant en dessous d'une distance prédéfinie de la position actuelle du véhicule **1**.

En variante, le dispositif **2** récupère depuis le serveur **3** les données des zones de vigilance **4** se trouvant en dessous d'une distance prédéfinie de la position actuelle du véhicule et accessibles via le réseau routier depuis cette position. Ladite distance prédéfinie est une distance rectiligne ou une distance curviligne suivant le tracé de la route, entre la position actuelle du véhicule **1** et un point prédéfini de la zone de vigilance **4**.

Ce point prédéfini peut être le centre d'une zone de vigilance **4**, un point d'entrée dans une zone de vigilance **4** suivant le sens de circulation qui lui est associé, un point de sortie de la zone de vigilance **4** suivant le sens de circulation qui lui est associé, un point du premier segment rectangulaire (dans le sens de circulation) d'une zone de vigilance **4**.

Dans un autre mode de réalisation, les données relatives aux zones de vigilance **4** se trouvant entre deux lignes de longitude et deux lignes de latitude sont chargées dans une mémoire tampon du dispositif **2** d'aide à la conduite. Ces lignes de longitude (respectivement, de latitude), sont choisies de part et d'autre de la longitude (respectivement, la latitude) actuelle du véhicule **1**, c.à.d. les zones de vigilances **4** se trouvant dans un carrée ou un rectangle centré sur la position actuelle du véhicule **1**.

Dans un autre mode de réalisation, l'ensemble des zones de vigilance **4** sont mémorisées (ou embarquées) dans le dispositif **2** d'aide à la conduite. La communication périodique entre le dispositif **2** d'aide à la conduite et le serveur **3** distant porte, dans ce cas, sur la mise à jour des informations comprises dans le dispositif **2** d'aide à la conduite (une nouvelle zone de vigilance **4** ou une mise à jour des données relatives à une zone de vigilance **4** existante). Ceci permet, avantageusement, de réduire la taille des données à télécharger.

Dans un autre mode de réalisation, lorsque le dispositif **2** d'aide à la conduite propose un service de navigation, le dispositif **2** d'aide à la conduite récupère avantageusement depuis le serveur **3** distant les données relatives aux zones de vigilance **4** se trouvant sur l'itinéraire du véhicule **1**.

Le processeur du dispositif **2** d'aide à la conduite détecte, sur la base de ses données de localisation, l'entrée ou la présence du véhicule **1** dans une zone de vigilance **4** (c.à.d. dans l'un quelconque des segments rectangulaires la constituant) grâce à un géorepérage (ou, en anglais, « geofencing ») du véhicule **1** par rapport aux zones de vigilance **4**.

Dans un mode de réalisation, le processeur compare régulièrement les coordonnées géographiques (latitude et longitude) du véhicule **1** aux données de localisation de la zone de vigilance **4**, pour détecter l'entrée ou la présence du véhicule **1** dans cette zone de vigilance **4**.

Dans un mode de réalisation, la détection d'entrée ou de présence du dispositif **2** d'aide à la conduite dans une zone de vigilance **4** porte uniquement sur une liste réduite de l'ensemble des zones de vigilance **4**. Cette liste réduite de zones de vigilance **4** candidates est déterminée sur la base des données de localisation du dispositif **2** d'aide à la conduite.

Une comparaison entre le sens de déplacement du véhicule **1** dans la zone de vigilance **4** et le sens de circulation relatif à cette zone de vigilance **4** n'est pas nécessaire lorsque la route **5** comprend un seul sens de circulation et/ou lorsque le dispositif **2** d'aide à la conduire dispose de l'itinéraire à suivre par le véhicule **1**.

Dans un mode de réalisation, le sens de déplacement ou le cap du véhicule **1** (ou le sens de déplacement du dispositif **2** d'aide à la conduite) dans la zone de vigilance **4** est déterminé à partir des coordonnées géographiques du véhicule **1** en une pluralité de positions dans la zone de vigilance **4**.

Dans un mode de réalisation, le cap du véhicule et le sens de circulation dans la zone de vigilance **4** sont déterminés par rapport à une même référence (par exemple, le nord géographique), afin de faciliter leur comparaison. Le véhicule **1** est considéré comme circulant dans le sens de circulation associé à la zone de vigilance **4** lorsque l'écart angulaire entre le cap du véhicule **1** (qui est le même que le sens de déplacement du dispositif **2** d'aide à la conduite) et le sens de circulation associé à chacun des segments rectangulaires de la zone de vigilance **4** est inférieur à une valeur prédéfinie (par exemple, 20°, 25°, 30°, ou 35°).

Lorsqu'un véhicule **1** comprenant le dispositif **2** d'aide à la conduite entre dans une zone de vigilance **4** et circule dans le sens de circulation **7** associé à cette zone de vigilance **4,** le processeur du dispositif **2** d'aide à la conduite :

- détermine la position du véhicule **1** dans la zone de vigilance **4** ou, d'une manière équivalente, la distance parcourue ou celle restante à parcourir par ce véhicule **1** dans la zone de vigilance **4 ;**
- détermine la vitesse de déplacement du véhicule **1** (ou, la vitesse de déplacement du dispositif **2** d'aide à la conduite) dans la zone de vigilance **4** à la distance déterminée ;
- détermine, à partir du profil **8** de vitesse associé à la zone de vigilance **4,** une vitesse recommandée correspondante à la position déterminée (ou, à la distance parcourue) du véhicule **1** dans la zone de vigilance **4 ;**
- calcule un écart entre vitesse déterminée du véhicule **1** et la vitesse recommandée ;
- génère une alerte, au moins lorsque l'écart entre la vitesse déterminée du véhicule **1** et la vitesse recommandée est supérieur à une valeur seuil d'alerte prédéfinie.

Le processeur d'aide à la conduite est, en outre, configuré pour déterminer un sens de déplacement du véhicule **1** dans la zone de vigilance **4** et pour utiliser le profil **8** de vitesse associé au sens de déplacement déterminé.

Dans un mode de réalisation, le dispositif **2** d'aide à la conduire détermine un contexte actuel de conduite du véhicule **1** à partir des données descriptives de contexte de conduite, décrites ci-dessus, à sa disposition. Dans ce cas, pour déterminer une vitesse recommandée, le dispositif **2** d'aide à la conduite utilise le profil **8** de vitesse qui correspond au contexte actuel de conduite du véhicule **1**.

La distance parcourue par le véhicule **1** dans une zone de vigilance **4** est la distance curviligne parcourue depuis son entrée dans la zone de vigilance **4**. Cette distance est déterminée par le processeur, en utilisant les données de localisation successives dans la zone de vigilance **4** du véhicule **1**.

L'alerte vise à inviter le conducteur à adapter la vitesse du véhicule **1** de sorte que sa vitesse suive/décrive sensiblement le profil **8** de vitesse. Cette comparaison vise également à ce que la vitesse du véhicule à certains points critiques de la zone de vigilance **4** soit sensiblement égale à une vitesse cible. La vitesse instantanée ou quasi-instantanée du véhicule **1** est, en effet, constamment comparée le long de la zone de vigilance **4** à des vitesses recommandées du profil 8 de vitesse qui sont variables en fonction de la position du véhicule **1** dans cette zone de vigilance **4.**

La comparaison de la vitesse instantanée du véhicule **1** à une distance parcourue dans la zone de vigilance **4** à une vitesse recommandée à cette même distance vise à déterminer si la vitesse actuelle du véhicule suit (ou évolue selon) le profil **8** de vitesse, et alerter le conducteur dès qu'il s'en écarte d'une quantité prédéfinie.

L'écart calculé entre la vitesse instantanée du véhicule **1** à une distance parcourue dans la zone de vigilance **4** et la vitesse recommandée à cette même distance est un écart absolu, un écart relatif ou un écart-type.

A l'effet d'une conduite économique et/ou un confort de conduite, le dispositif **2** d'aide à la conduire est apte à proposer des vitesses recommandées, en fonction de la valeur de l'écart calculé, de sorte à permettre d'approcher ou de rejoindre de manière lisse un profil **8** de vitesse.

Dans un mode de réalisation, la valeur seuil d'alerte est propre à chaque zone de vigilance **4** et/ou à chaque contexte de conduite (c.à.d. à chaque profil utilisateur, chaque contexte temporel, chaque contexte climatique, ou chaque contexte de véhicule). La valeur seuil d'alerte, dans un autre mode de réalisation, décroit lorsque le véhicule **1** s'approche d'un point critique de la zone de vigilance **4** (par exemples, le point où la courbure est maximale dans un virage, le début d'un embouteillage, le lieu d'un accident, une intersection non contrôlée, le sommet de côte, le lieu d'une sortie d'école).

L'émission d'une alerte tient avantageusement compte de préférences utilisateur, précisées au préalable dans un profil utilisateur. Les préférences utilisateur comprennent, par exemple, différents niveaux de sécurité telles que « haute », « moyenne », « moyenne basse », « basse », permettant d'identifier les zones des vigilances **4** dans lesquelles l'utilisateur est alerté, la fréquence des alertes dans une zone de vigilance **4,** la valeur seuil d'alerte, et/ou le mode d'affichage d'une alerte.

Une alerte est ainsi émise à l'attention de l'utilisateur à une distance parcourue dans la zone de vigilance **4** lorsqu'au moins une condition est vérifiée. Dans un mode de réalisation, cette condition porte sur l'écart entre la vitesse actuelle du véhicule **1** et une vitesse recommandée, toutes deux déterminées sensiblement à la même distance parcourue (ou distante restante), par rapport à une valeur seuil d'alerte prédéfinie. En combinaison, d'autres conditions portant sur le contexte de conduite et/ou le sens de déplacement sont considérées.

L'alerte à l'attention du conducteur comprend (sous forme visuelle et/ou sonore) la vitesse recommandée et/ou l'écart calculé. Dans un mode de réalisation, l'alerte comprend une superposition dans un même repère de la vitesse actuelle du véhicule **1** et, au moins partiellement, le profil **8** de vitesse.

Cette alerte peut aussi comprendre des métadonnées concernant la zone de vigilance **4** (le motif de vigilance de type « virage serré » ou « accident », la longueur totale de la zone de vigilance, la date de la dernière mise à jour, le nombre d'utilisateurs dont les données de vitesse ont été utilisées pour établir le profil de vitesse **8** par exemples), la distance curviligne restante à parcourir dans la zone de vigilance **4,** et/ou une invitation du conducteur à réduire sa vitesse de type « ralentir », « attention, vitesse excessive », ou « adapter votre vitesse ».

Les vitesses instantanées du véhicule **1** dans la zone de vigilance **4** ainsi que les positions auxquelles ces vitesses sont déterminées par le dispositif **2** d'aide à la conduite sont communiquées au serveur **3** distant.

Le serveur **3** distant utilise ces nouvelles données pour mettre à jour les données relatives à la zone de vigilance **4** qui vient d'être traversée.

Le serveur **3** distant met ainsi constamment à jour les données relatives aux zones de vigilance **4** (des nouvelles zones peuvent être ajoutées, d'autres supprimées, et d'autres modifiées), dont notamment les zones de vigilance **4** couvrant un évènement changeant tel qu'un embouteillage, un brouillard, un verglas, des travaux, un mouvement social, ou un convoi exceptionnel.

Pour améliorer la fiabilité ainsi que pour mettre à jour des données relatives à une zone de vigilance **4,** le serveur **3** distant envoie à au moins un véhicule **1** venant de passer sur une zone de vigilance **4** un message d'interrogation portant sur au moins une information concernant cette zone (par exemples son existence, son niveau de danger, pertinence de la vitesse recommandée).

Pour cela, le dispositif **2** d'aide à la conduite comprend des moyens d'interrogation (un écran et/ou un haut-parleur par exemples) de l'utilisateur du véhicule **1** sur une information concernant la zone de vigilance **4** sitôt après son passage sur cette dernière. Le dispositif **2** d'aide à la conduite comporte des moyens (un clavier, un clavier tactile ou un micro par exemples ou, plus généralement, tout moyen d'entrée de données), aptes à permettre à l'utilisateur de répondre à cette interrogation. La réponse de l'utilisateur est communiquée, via le module de communication du dispositif 2 d'aide à la conduite, au serveur 3 distant.

La pertinence des vitesses recommandées le long d'une zone de vigilance **4** est améliorée avec l'augmentation des membres de la communauté d'utilisateurs pourvus du dispositif **2** d'aide à la conduite et passant par cette zone de vigilance **4**. Cette pertinence est encore améliorée lorsque des relevées de vitesse sont effectuées dans différentes conditions climatiques et/ou différents contextes temporels (jour, nuit, saison, heure, éblouissement, jours ouvrés, fin de semaine, jours fériés), et/ou différents profils utilisateur et/ou différents types et performances de véhicules.

Avantageusement, le système de recommandation de vitesse décrit ci-dessus est en mesure de permettre un affinage de sa précision en cours d'usage à plusieurs niveaux : d'une part au niveau général de tous les conducteurs qui utilisent celui-ci (communication de données de vitesse dans les zones de vigilances **4** existantes pour affiner les profils **8** de vitesse et en dehors des zones de vigilances existantes pour en détecter des nouvelles), et d'autre part au niveau individuel de chacun des conducteurs et/ou véhicules (profil utilisateur).

Avantageusement, le système de recommandation de vitesse ci-dessus permet à un utilisateur disposant dans son véhicule du dispositif **2** d'aide à la conduite d'adapter sa conduite, sur la base de données expérimentales, provenant de conducteurs de profil semblable au sien.

Avantageusement, dans un même contexte de conduite, des conducteurs de profils semblables se voient ainsi attribués un même profil **8** de vitesse à suivre dans une zone de vigilance.

Avantageusement, en recommandant une vitesse adaptée par position, les différents modes de réalisation décrits ci-dessus améliorent la sécurité routière notamment dans les zones de vigilance mobiles et/ou temporaires (embouteillage, un brouillard, un objet sur la route, un véhicule arrêté sur la chaussée, un accident, un mouvement social, un convoi exceptionnel).

**Revendications**

**1.** Serveur (3) distant configuré pour

- collecter des données de vitesse de déplacement associées à des positions sur une route (5);
- calculer une valeur statistique des données de vitesse associées à sensiblement une même position desdites positions;
le serveur étant **caractérisé en ce qu'**il est configuré pour
- calculer une différence positive entre la valeur statistique calculée et une vitesse limite prédéfinie associée à ladite sensiblement même position de la route (5);
- au moins lorsque la différence positive calculée est supérieure à une valeur seuil prédéfinie, générer, sur la base d'une carte numérique de la route (5), des données de localisation définissant une zone de vigilance (4) dans laquelle une attention particulière à la vitesse de déplacement est requise, la zone de vigilance (4) couvrant un tronçon de route de la route (5) et intégrant ladite sensiblement même position.

**2.** Serveur (3) distant selon la revendication 1, **caractérisé en ce qu'**il est, en outre, configuré pour

- déterminer, parmi les données de vitesse collectées, des données de vitesse de déplacement associées à des positions comprises dans la zone de vigilance (4) ;
- déterminer un profil (8) de vitesse qui est une fonction approchant les variations, en fonction des positions dans la zone de vigilance (4) des données de vitesse collectées associées à des positions comprises dans la zone de vigilance (4), ce profil (8) de vitesse associant à une position donnée dans la zone de vigilance (4) une vitesse de déplacement recommandée, le profil (8) de vitesse déterminée étant associé à ladite zone de vigilance (4).

3. Serveur (3) distant selon la revendication précédente, **caractérisé en ce qu'**il est, en outre, configuré pour

   - collecter, avec les données de vitesse de déplacement, des données descriptives d'un contexte de conduite tel que conditions climatiques, performances du véhicule ;
   - sur la base de critères prédéfinis distinctifs d'un moins un premier contexte de conduite et un deuxième contexte de conduite, distinguer dans les données de vitesse de déplacement collectées au moins un premier groupe de données de vitesse de déplacement et un deuxième groupe de données de vitesse de déplacement, un premier profil de vitesse correspondant au premier groupe et un deuxième profil de vitesse correspondant au deuxième groupe étant associés à ladite zone de vigilance (4) et, respectivement, audit premier contexte de conduite et audit deuxième contexte de conduite.

4. Serveur (3) distant selon la revendication 2 ou 3, **caractérisé en ce qu'**il est, en outre, configuré pour filtrer les données de vitesse de déplacement collectées de sorte à ne prendre en considération pour le calcul de la valeur statistique que les données de vitesse de déplacement dans un sens de déplacement prédéfini sur la route (5), le profil de vitesse déterminé étant associé audit sens de déplacement prédéfini.

5. Serveur (3) distant selon l'une quelconque des revendications précédentes, **caractérisé en ce que** la valeur statistique est une moyenne, le mode, ou la médiane.

6. Serveur (3) distant selon l'une quelconque des revendications précédentes, **caractérisé en ce qu'**il est, en outre, configuré pour générer les données de localisations définissant ladite zone de vigilance (4) lorsque le rayon de courbure de la route (5) à ladite sensiblement même position est inférieur à une valeur de rayon prédéfinie.

7. Serveur (3) distant selon l'une quelconque des revendications précédentes, **caractérisé en ce que** la zone de vigilance (4) comprend une pluralité de segments rectangulaires (41-44) jointifs suivant la courbure du tronçon de route.

8. Système de recommandation de vitesse de déplacement, ce système comprenant le serveur (3) distant de l'une quelconque des revendications 1 à 7 et un dispositif (2) d'aide à la conduite destiné à être embarqué dans un véhicule (1) comprenant un module de localisation configuré pour générer des données de localisation permettant de localiser une position du dispositif (2) d'aide à la conduite ; un processeur configuré pour

   détecter, sur la base des données de localisation, la présence du dispositif (2) d'aide à la conduite dans une zone de vigilance (4) prédéfinie dans laquelle une attention particulière à la vitesse de déplacement est requise ;
   identifier un profil (8) de vitesse prédéterminée associé à la zone de vigilance (4), ce profil (8) de vitesse associant à différentes positions données dans la zone de vigilance (4) une vitesse de déplacement recommandée ;
   déterminer la position du dispositif (2) d'aide à la conduite dans la zone de vigilance (4);
   déterminer une vitesse de déplacement du dispositif (2) d'aide à la conduite sensiblement à la position déterminée ;
   déterminer à partir du profil (8) de vitesse une vitesse de déplacement recommandée associée à la position déterminée ;
   calculer un écart entre la vitesse de déplacement déterminée et la vitesse de déplacement recommandée déterminée ;
   déclencher une alerte au moins lorsque l'écart calculé est supérieur à une valeur seuil d'alerte prédéfinie.

9. Système selon la revendication précédente, **caractérisé en ce que** le dispositif (2) d'aide à la conduite est un terminal utilisateur mobile.

10. Système selon la revendication 8 ou 9, **caractérisé en ce qu'**il comprend, en outre, un module de communication configuré pour communiquer au serveur (3) distant des données de vitesse de déplacement associées à des positions du dispositif (2) d'aide à la conduite.

11. Système selon l'une quelconque des revendications 8 à 10, **caractérisé en ce que** le processeur est, en outre, configuré pour déterminer un sens de déplacement dans la zone de vigilance (4) du dispositif (2) d'aide à la conduite, le profil de vitesse identifié étant, en outre, associé au sens de déplacement déterminé.

12. Système selon l'une quelconque des revendications 8 à 11, **caractérisé en ce qu'**il est configuré pour déterminer, sur la base d'une pluralité de données, un contexte de conduite du véhicule (1), le profil (8) de vitesse identifié étant, en outre, associé au contexte de conduite déterminé.

13. Système selon la revendication 12, **caractérisé en ce que** le contexte de conduite comprend une pluralité d'informations intégrant l'heure de conduite, la date de conduite, des informations climatiques, des informations relatives au véhicule (1), des informations relatives au tronçons de route couvert par la zone de vigilance (4), et/ou des informations relatives au conducteur du véhicule (1).

14. Méthode de recommandation de vitesse de déplacement comprenant les étapes suivantes :

- collecte de données de vitesse de déplacement associées à des positions sur une route (5);
- calcul d'une valeur statistique des données de vitesse associées à sensiblement une même position desdites positions;
la méthode étant **caractérisée en ce qu'**elle comprend les étapes suivantes
- calcul d'une différence positive entre la valeur statistique calculée et une vitesse limite prédéfinie associée à ladite sensiblement même position de la route (5);
- au moins lorsque la différence positive calculée est supérieure à une valeur seuil prédéfinie, génération, sur la base d'une carte numérique de la route (5), des données de localisation définissant une zone de vigilance (4) dans laquelle une attention particulière à la vitesse de déplacement est requise, la zone de vigilance (4) couvrant un tronçon de route de la route (5) et intégrant ladite sensiblement même position ;
- détection de la présence d'un dispositif (2) d'aide à la conduite sur un tronçon de route couvert par la zone de vigilance (4) générée ;
- identification d'un profil (8) de vitesse prédéterminée associé à la zone de vigilance (4), ce profil (8) de vitesse associant à différentes positions données dans la zone de vigilance (4) une vitesse de déplacement recommandée ;
- détermination de la position du dispositif (2) d'aide à la conduite dans la zone de vigilance (4);
- détermination d'une vitesse de déplacement du dispositif (2) d'aide à la conduite sensiblement à la position déterminée ;
- détermination, à partir du profil (8) de vitesse, d'une vitesse de déplacement recommandée associée à la position déterminée ;
- calcul d'un écart entre la vitesse de déplacement déterminée et la vitesse de déplacement recommandée déterminée ;
- déclenchement d'une alerte au moins lorsque l'écart calculé est supérieur à une valeur seuil d'alerte prédéfinie.

**Patentansprüche**

1. Remote-Server (3), der ausgelegt ist, um

- Fahrgeschwindigkeitsdaten zu sammeln, die Positionen auf einer Straße (5) zugeordnet sind;
- einen statistischen Wert der Geschwindigkeitsdaten zu berechnen, die im Wesentlichen einer gleichen Position der Positionen zugeordnet sind;
- wobei der Server **dadurch gekennzeichnet ist, dass** er ausgelegt ist, um eine positive Differenz zwischen dem berechneten statistischen Wert und einer vorbestimmten Grenzgeschwindigkeit zu berechnen, die der im Wesentlichen gleichen Position der Straße (5) zugeordnet ist;
- mindestens, wenn die berechnete positive Differenz größer als ein vordefinierter Schwellenwert ist, auf der Grundlage einer digitalen Karte der Straße (5) Standortdaten zu generieren, die einen Überwachungsbereich (4) definieren, in dem eine besondere Aufmerksamkeit für die Fahrgeschwindigkeit erforderlich ist, wobei der Überwachungsbereich (4) einen Straßenabschnitt der Straße (5) abdeckt und die im Wesentlichen gleiche Position integriert.

2. Remote-Server (3) nach Anspruch 1, **dadurch gekennzeichnet, dass** er ferner ausgelegt ist, um

- aus den gesammelten Geschwindigkeitsdaten Fahrgeschwindigkeitsdaten zu bestimmen, die Positionen innerhalb des Überwachungsbereichs (4) zugeordnet sind;
- ein Geschwindigkeitsprofil (8) zu bestimmen, das eine Funktion ist, die sich den Schwankungen annähert, in Abhängigkeit von den Positionen im Überwachungsbereich (4) der gesammelten Geschwindigkeitsdaten, die Positionen innerhalb des Überwachungsbereichs (4) zugeordnet sind, wobei dieses Geschwindigkeitsprofil (8) einer bestimmten Position im Überwachungsbereich (4) eine empfohlene Fahrgeschwindigkeit zuordnet, wobei das bestimmte Geschwindigkeitsprofil (8) dem Überwachungsbereich (4) zugeordnet ist.

3. Remote-Server (3) nach vorhergehendem Anspruch, **dadurch gekennzeichnet, dass** er ferner ausgelegt ist, um

- mit den Fahrgeschwindigkeitsdaten beschreibende Daten eines Fahrkontextes wie Witterungsbedingungen, Fahrzeugleistung zu sammeln;

- auf der Grundlage vordefinierter Kriterien, die sich von mindestens einem ersten Fahrkontext und einem zweiten Fahrkontext unterscheiden, in den gesammelten Fahrgeschwindigkeitsdaten mindestens eine erste Gruppe von Fahrgeschwindigkeitsdaten und eine zweite Gruppe von Fahrgeschwindigkeitsdaten zu unterscheiden, wobei ein erstes Geschwindigkeitsprofil, das der ersten Gruppe entspricht, und ein zweites Geschwindigkeitsprofil, das der zweiten Gruppe entspricht, dem Überwachungsbereich (4) zugeordnet sind und jeweils dem ersten Fahrkontext und dem zweiten Fahrkontext.

4. Remote-Server (3) nach Anspruch 2 oder 3, **dadurch gekennzeichnet, dass** er ferner ausgelegt ist, um die gesammelten Fahrgeschwindigkeitsdaten derart zu filtern, dass für die Berechnung des statistischen Wertes nur die Fahrgeschwindigkeitsdaten in einer vordefinierten Fahrtrichtung auf der Straße (5) berücksichtigt werden, wobei das ermittelte Geschwindigkeitsprofil dieser vordefinierten Fahrtrichtung zugeordnet ist.

5. Remote-Server (3) nach einem der vorhergehenden Ansprüche, **dadurch gekennzeichnet, dass** der statistische Wert ein Mittelwert, der Modus oder der Median ist.

6. Remote-Server (3) nach einem der vorhergehenden Ansprüche, **dadurch gekennzeichnet, dass** er ferner ausgelegt ist, um die Ortungsdaten zu generieren, die den Überwachungsbereich (4) definieren, wenn der Krümmungsradius der Straße (5) an der im Wesentlichen gleichen Position kleiner als ein vordefinierter Radiuswert ist.

7. Remote-Server (3) nach einem der vorhergehenden Ansprüche, **dadurch gekennzeichnet, dass** der Überwachungsbereich (4) eine Vielzahl verbundener rechteckiger Segmente (41-44) umfasst, die der Krümmung des Straßenabschnitts folgen.

8. System zur Empfehlung der Fahrgeschwindigkeit, wobei dieses System den Remote-Server (3) nach einem der Ansprüche 1 bis 7 und eine Fahrerassistenzvorrichtung (2) umfasst, die zum Einbau in ein Fahrzeug (1) bestimmt ist, die eines Ortungsmodul umfasst, das ausgelegt ist, um Ortungsdaten zu generieren, die erlauben, eine Position der Fahrerassistenzvorrichtung (2) zu lokalisieren; einen Prozessor, der ausgelegt ist, um

- auf der Grundlage der Standortdaten das Vorhandensein der Fahrerassistenzvorrichtung (2) in einem vordefinierten Überwachungsbereich (4) zu erkennen, in dem eine besondere Aufmerksamkeit für die Fahrgeschwindigkeit erforderlich ist;
- ein dem Überwachungsbereich (4) zugeordnetes vorbestimmtes Geschwindigkeitsprofil (8) zu identifizieren, wobei dieses Geschwindigkeitsprofil (8) verschiedenen gegebenen Positionen im Überwachungsbereich (4) eine empfohlene Fahrgeschwindigkeit zuordnet;
- die Position der Fahrerassistenzvorrichtung (2) im Überwachungsbereich (4) zu bestimmen;
- eine Fahrgeschwindigkeit der Fahrerassistenzvorrichtung (2) im Wesentlichen an der bestimmten Position zu bestimmen;
- aus dem Geschwindigkeitsprofil (8) eine empfohlene Fahrgeschwindigkeit zu bestimmen, die der bestimmten Position zugeordnet ist;
- eine Abweichung zwischen der ermittelten Fahrgeschwindigkeit und der ermittelten empfohlenen Fahrgeschwindigkeit zu berechnen;
- mindestens eine Warnung auszulösen, wenn die berechnete Abweichung einen vordefinierten Warnschwellenwert überschreitet.

9. System nach vorhergehendem Anspruch, **dadurch gekennzeichnet, dass** die Fahrerassistenzvorrichtung (2) ein mobiles Benutzerendgerät ist.

10. System nach Anspruch 8 oder 9, **dadurch gekennzeichnet, dass** es ferner ein Kommunikationsmodul umfasst, das ausgelegt ist, um dem Remote-Server (3) Fahrgeschwindigkeitsdaten zu übermitteln, die Positionen der Fahrerassistenzvorrichtung (2) zugeordnet sind.

11. System nach einem der Ansprüche 8 bis 10, **dadurch gekennzeichnet, dass** der Prozessor ferner ausgelegt ist, um eine Bewegungsrichtung im Überwachungsbereich (4) der Fahrerassistenzvorrichtung (2) zu bestimmen, wobei das identifizierte Geschwindigkeitsprofil ferner der bestimmten Bewegungsrichtung zugeordnet ist.

12. System nach einem der Ansprüche 8 bis 11, **dadurch gekennzeichnet, dass** es ausgelegt ist, um auf der Grundlage einer Vielzahl von Daten einen Fahrkontext des Fahrzeugs (1) zu bestimmen, wobei das identifizierte Geschwindigkeitsprofil (8) ferner dem bestimmten Fahrkontext zugeordnet ist.

13. System nach Anspruch 12, **dadurch gekennzeichnet, dass** der Fahrkontext eine Vielzahl von Informationen umfasst, die Fahrzeit, Fahrdatum, Klimainformationen, Fahrzeuginformationen (1), Informationen über den vom Überwachungsbereich (4) abgedeckten Streckenabschnitt und/oder Informationen über den Fahrer des Fahrzeugs (1) umfassen.

14. Verfahren zur Empfehlung der Fahrgeschwindigkeit, das die folgenden Schritte umfasst:

- Sammeln von Fahrgeschwindigkeitsdaten, die Positionen auf einer Straße (5) zugeordnet sind;
- Berechnen eines statistischen Werts der Geschwindigkeitsdaten, die im Wesentlichen einer gleichen Position der Positionen zugeordnet sind;
- wobei das Verfahren **dadurch gekennzeichnet ist, dass** es die folgenden Schritte Berechnen einer positiven Differenz zwischen dem berechneten statistischen Wert und einer vordefinierten Grenzgeschwindigkeit, die mit der im Wesentlichen gleichen Position der Straße (5) zugeordnet ist, umfasst;
- mindestens, wenn die berechnete positive Differenz größer als ein vordefinierter Schwellenwert ist, Generieren auf der Grundlage einer digitalen Karte der Straße (5) von Standortdaten, die einen Überwachungsbereich (4) definieren, in dem eine besondere Aufmerksamkeit für die Fahrgeschwindigkeit erforderlich ist, wobei der Überwachungsbereich (4) einen Straßenabschnitt der Straße (5) abdeckt und die im Wesentlichen gleiche Position integriert;
- Erkennen des Vorhandenseins einer Fahrerassistenzvorrichtung (2) auf einem Straßenabschnitt, der von dem generierten Überwachungsbereich (4) abgedeckt ist;
- Identifizieren eines dem Überwachungsbereich (4) zugeordneten vorbestimmten Geschwindigkeitsprofils (8), wobei dieses Geschwindigkeitsprofil (8) verschiedenen gegebenen Positionen im Überwachungsbereich (4) eine empfohlene Fahrgeschwindigkeit zuordnet;
- Bestimmen der Position der Fahrerassistenzvorrichtung (2) im Überwachungsbereich (4);
- Bestimmen einer Fahrgeschwindigkeit der Fahrerassistenzvorrichtung (2) im Wesentlichen an der bestimmten Position;
- Bestimmen, aus dem Geschwindigkeitsprofil (8), einer empfohlenen Fahrgeschwindigkeit, die der bestimmten Position zugeordnet ist;
- Berechnen einer Abweichung zwischen der ermittelten Fahrgeschwindigkeit und der ermittelten empfohlenen Fahrgeschwindigkeit;
- Auslösen von mindestens einer Warnung, wenn die berechnete Abweichung einen vordefinierten Warnschwellenwert überschreitet.

## Claims

1. A remote server (3) configured to

    - collect travel speed data associated with positions on a road (5);
    - calculate a statistical value of the speed data associated with substantially a same position of said positions;
    - the server being **characterised in that** it is configured to calculate a positive difference between the statistical value calculated and a predefined limit speed associated with said substantially same position of the road (5);
    - at least when the positive difference calculated is greater than a predefined threshold value, generate, based on a digital map of the road (5), location data defining a vigilance zone (4) in which particular attention to the travel speed is required, the vigilance zone (4) covering a road section of the road (5) and integrating said substantially same position.

2. The remote server (3) according to claim 1, **characterised in that** it is further configured to

    - determine, among the speed data collected, travel speed data associated with positions included in the vigilance zone (4);
    - determine a speed profile (8) that is a function approaching variations, according to the positions in the vigilance zone (4) of the speed data collected associated with positions included in the vigilance zone (4), this speed profile (8) associating with a given position in the vigilance zone (4) a recommended travel speed, the speed profile (8) determined being associated with said vigilance zone (4).

3. The remote server (3) according to the preceding claim, **characterised in that** it is further configured to

    - collect, with the travel speed data, descriptive data of a driving context such as climatic conditions, vehicle performance;
    - based on predefined criteria distinctive of at least one first driving context and a second driving context, distinguish in the travel speed data collected at least one first group of travel speed data and a second group of travel speed data, a first speed profile corresponding to the first group and a second speed profile corresponding to the second group being associated with said vigilance zone (4) and, respectively, with the first driving context and with the second driving context.

4. The remote server (3) according to claim 2 or 3, **characterised in that** it is further configured to filter the travel speed data collected so as to take into consideration for the calculation of the statistical value only the travel speed data in a predefined direction of travel on the road (5), the determined speed profile being associated with said predefined direction of travel.

5. The remote server (3) according to any of the preceding claims, **characterised in that** the statistical value is an average, the mode, or the median.

6. The remote server (3) according to any of the preceding claims, **characterised in that** it is further configured to generate the location data defining said vigilance zone (4) when the radius of curvature of the road (5) at said substantially same position is less than a predefined radius value.

7. The remote server (3) according to any of the preceding claims, **characterised in that** the vigilance zone (4) comprises a plurality of joint rectangular segments (41-44) following the curvature of the road section.

8. A travel speed recommendation system, this system comprising the remote server (3) of any of claims 1 to 7 and a driving assistance device (2) to be embedded in a vehicle (1) comprising a location module configured to generate location data for locating a position of the driving assistance device (2); a processor configured to

 - detect, based on the location data, the presence of the driving assistance device (2) in a predefined vigilance zone (4) in which particular attention to the travel speed is required;
 - identify a predetermined speed profile (8) associated with the vigilance zone (4), this speed profile (8) associating with different given positions in the vigilance zone (4) a recommended travel speed;
 - determine the position of the driving assistance device (2) in the vigilance zone (4);
 - determine a travel speed of the driving assistance device (2) substantially at the position determined;
 - determine from the speed profile (8) a recommended travel speed associated with the position determined;
 - calculate a deviation between the travel speed determined and the recommended travel speed determined;
 - trigger an alert at least when the deviation calculated is greater than a predefined alert threshold value.

9. The system according to the preceding claim, **characterised in that** the driving assistance device (2) is a mobile user terminal.

10. The system according to claim 8 or 9, **characterised in that** it further comprises a communication module configured to communicate to the remote server (3) travel speed data associated with positions of the driving assistance device (2).

11. The system according to any of claims 8 to 10, **characterised in that** the processor is further configured to determine a travel direction in the vigilance zone (4) of the driving assistance device (2), the identified speed profile being further associated with the travel direction determined.

12. The system according to any of claims 8 to 11, **characterised in that** it is configured to determine, based on a plurality of data, a driving context of the vehicle (1), the identified speed profile (8) being further associated with the driving context determined.

13. The system according to claim 12, **characterised in that** the driving context comprises a plurality of pieces of information integrating the driving time, the driving date, climate information, information relating to the vehicle (1), information relating to the road sections covered by the vigilance zone (4), and/or information relating to the driver of the vehicle (1).

14. A travel speed recommendation method comprising the following steps:

 - collecting travel speed data associated with positions on a road (5);
 - calculating a statistical value of the speed data associated with substantially a same position of said positions;
 - the method being **characterised in that** it comprises the following steps of calculating a positive difference between the statistical value calculated and a predefined limit speed associated with said substantially same position of the road (5);
 - at least when the positive difference calculated is greater than a predefined threshold value, generating, based on a digital map of the road (5), location data defining a vigilance zone (4) in which particular attention to the travel speed is required, the vigilance zone (4) covering a road section of the road (5) and integrating said substantially same position;
 - detecting the presence of a driving assistance device (2) on a road section covered by the vigilance zone (4) generated;
 - identifying a predetermined speed profile (8) associated with the vigilance zone (4), this speed profile (8) associating with different given positions in the vigilance zone (4) a recommended travel speed;
 - determining the position of the driving assistance device (2) in the vigilance zone (4);
 - determining a travel speed of the driving assistance device (2) substantially at the position determined;

- determining, from the speed profile (8), a recommended travel speed associated with the position determined;
- calculating a deviation between the travel speed determined and the recommended travel speed determined;
- triggering an alert at least when the deviation calculated is greater than a predefined alert threshold value.

Fig. 1

Fig. 2

Fig. 3

**EP 3 931 061 B1**

## RÉFÉRENCES CITÉES DANS LA DESCRIPTION

**Documents brevets cités dans la description**

- WO 2017174623 A
- US 2017057411 A